# EUROPEAN PATENT APPLICATION

(11) **EP 3 287 970 A1**
(43) Date of publication of application: **28.02.2018**
(21) Application number: 16185547.3
(22) Date of filing: 24.08.2016
(51) Int. Cl.: G06Q 20/34, G06Q 20/40, G06Q 20/10, G06Q 20/12

(54) **METHOD AND SYSTEM FOR EFFECTING A PRE-PAID REDEEMABLE TRANSACTION**

(71) Applicant: Mastercard International Incorporated, New York, NY 10577 (US)
(72) Inventor: CLERKIN, John, County Wicklow, A63 EE94 (IE); TUTE, Ramson, County Kildare, W23 W0V6 (IE); O'MULLANE, Ronan, Cork (IE)
(74) Representative: FRKelly

(57) **Abstract**

Provided are a method and system for effecting a pre-paid redeemable transaction. The method comprises generating payment request data associated with a benefactor on a payer application; the payment request data comprises redeemable payment data associated with a predetermined beneficiary which is valid for a predetermined time period. The payment request data is forwarded from the payer application to a payment server. The payment server initates a payment transaction from a source account associated with the benefactor to a predetermined account in response to receiving the payment request data. The payment transaction is refunded to the source account from the predetermined account if the beneficiary fails to validate the redeemable payment data within the predetermined time period or after the expiry period.

## Description

### Field of the Invention

The present disclosure relates to a method and system for effecting a pre-paid redeemable transaction. More particularly, but not exclusively, it relates to a method and system for effecting a pre-paid redeemable which may be refunded if not redeemed with a predetermined time period.

### Background of the Disclosure

Printed vouchers were popular for providing redeemable transactions that entitled holders to exchange for goods or services. Paper vouchers provided a convenient way of gifting an individual a certain monetary value which could be redeemed in a particular store. Recently, gift cards have become a popular way for providing redeemable transactions which may be used in multiple different stores. A gift card is a pre-paid money card that is typically issued by a bank or retailer and may be used as an alternative to cash purchases within particular stores. A significant disadvantage of known redeemable transaction types such as printed vouchers or gift cards is that there is no technological mechanism to refund the amount if the transaction is not redeemed.

There is therefore a need to provide a method and system for effecting a redeemable transaction which addresses at least some of the drawbacks of the prior art.

### Summary of the Invention

In accordance with an aspect of the present invention; there is provided a computer-implemented method for effecting a pre-paid redeemable transaction, the method comprising:
generating payment request data associated with a benefactor on a payer application; the payment request data comprises redeemable payment data associated with a predetermined beneficiary which is valid for a predetermined time period,
forwarding the payment request data from the payer application to a payment server;
initiating by the payment server a payment transaction from a source account associated with the benefactor to a predetermined account in response to receiving the payment request data; and
refunding the payment transaction to the source account from the predetermined account if the beneficiary fails to validate the redeemable payment data within the predetermined time period.

In one embodiment, the payer application is configured to allow the benefactor to manipulate the payment request data during the predetermined time period.

In another embodiment, the payer application is configured to allow the benefactor to revise the payment request data in order to extend the predetermined time period.

In a further embodiment, the method includes forwarding a notification to the beneficiary containing the redeemable payment data.

In another embodiment, the redeemable payment data comprises at least one of a machine readable code; a bar code, a quick response (QR) code, an identifier, an identification number, or a password, or the like.

In one exemplary embodiment, the method includes presenting by the beneficiary the notification containing the redeemable payment data to a point of sale interface to effect validation of the redeemable payment data.

In another embodiment, the payer application comprises a graphical user interface (GUI) for facilitating the benefactor interfacing with the payer application. Advantageously, the GUI comprises status indicia indicative of the status of the pre-paid redeemable transaction; and/or indicative of the remaining time before the predetermined period expires.

In one embodiment, the payment server is configured to send one or more reminder messages to the beneficiary prior to the redeemable payment data being validated. In another embodiment, a database is accessible by the payment server. Advantageously, the database comprises particulars associated with one or more benefactors and/or particulars associated with one or more third parties; and/or particulars associated with one or more beneficiaries.

In accordance with another aspect of the invention, a computer-readable medium is provided comprising non-transitory instructions which, when executed, cause a processor to effect a pre-paid redeemable transaction, the method comprising:
generating payment request data associated with a benefactor on a payer application; the payment request data comprises redeemable payment data associated with a predetermined beneficiary which is valid for a predetermined time period,
forwarding the payment request data from the payer application to a payment server;
initiating by the payment server a payment transaction from a source account associated with the benefactor to a predetermined account in response to receiving the payment request data; and
refunding the payment transaction to the source account from the predetermined account if the beneficiary fails to validate the redeemable payment data within the predetermined time period.

In a further aspect of the invention there is provided a system for effecting a pre-paid redeemable transaction; the system comprising one or more modules which are configured to:
generate payment request data associated with a benefactor on a payer application; the payment request data comprises redeemable payment data associated with a predetermined beneficiary which is valid for a predetermined time period,
forward the payment request data from the payer application to a payment server;
initiate by the payment server a payment transaction from a source account associated with the benefactor to a predetermined account in response to receiving the payment request data;
refund the payment transaction to the source account from the predetermined account if the beneficiary fails to validate the redeemable payment data within the predetermined time period.

In one aspect of the invention there is provided a client device being co-operable with a payment server for effecting a pre-paid redeemable transaction; the client device comprising one or more modules which are configured to
generate payment request data associated with a benefactor on a payer application; the payment request data comprises redeemable payment data associated with a predetermined beneficiary which is valid for a predetermined time period, and
forward the payment request data from the payer application to a payment server.

In another aspect of the invention there is provided a payment server being co-operable with a client device for effecting a payment transaction; the payment server comprising one or more modules which are configured to
receive the payment request data from the payer application;
initiate a payment transaction from a source account associated with the benefactor to a predetermined account in response to receiving the payment request data; and
refund the payment transaction to the source account from the predetermined account if the beneficiary fails to validate the redeemable payment data within the predetermined time period.

### BRIEF DESCRIPTION OF THE DRAWINGS

Embodiments of the present invention will now be described, by way of example only, with reference to the accompanying drawings, in which:
FIG. 1 is a diagram of a system which is configured for effecting a pre-paid redeemable transaction;
FIG. 2 is an expanded diagram of the system of Figure 1;
FIG. 3 is a diagram of a client device which forms part of the system of Figure 1;
FIG. 4 is a flow chart illustrating exemplary steps for effecting an exemplary pre-paid redeemable transaction in accordance with the present disclosure.
FIG. 5 is a diagram of exemplary steps of a pre-paid redeemable transaction being implemented by the system of Figure 1 being used to pay for a meal in a restaurant.
FIG. 6 is a diagram of exemplary steps of a pre-paid redeemable transaction being implemented by the system of Figure 1 which includes the ability to extend the period for claiming a gift if the gift is unclaimed within an initial period.
FIG. 7 is a diagram of exemplary steps of a pre-paid redeemable transaction being implemented by the system of Figure 1 in a scenario when the benefactor does not know the beneficiary.
FIG. 8 is a diagram of exemplary steps of a pre-paid redeemable transaction being implemented by the system of Figure 1 which includes the capability to send a notification to a benefactor indicating that a pre-paid item has not been claimed and that the expiry period is approaching.

### DESCRIPTION OF THE PREFERRED EMBODIMENT

Embodiments of the present invention will now be described with reference to an exemplary system for effecting a pre-paid redeemable transaction. It will be understood that the exemplary system is provided to assist in an understanding of the present teaching and is not to be construed as limiting in any fashion. Furthermore, modules or elements that are described with reference to any one Figure may be interchanged with those of other Figures or other equivalent elements without departing from the spirit of the present teaching.

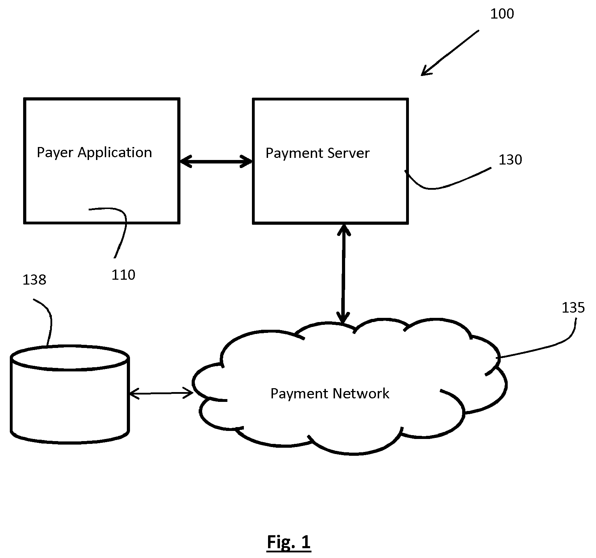

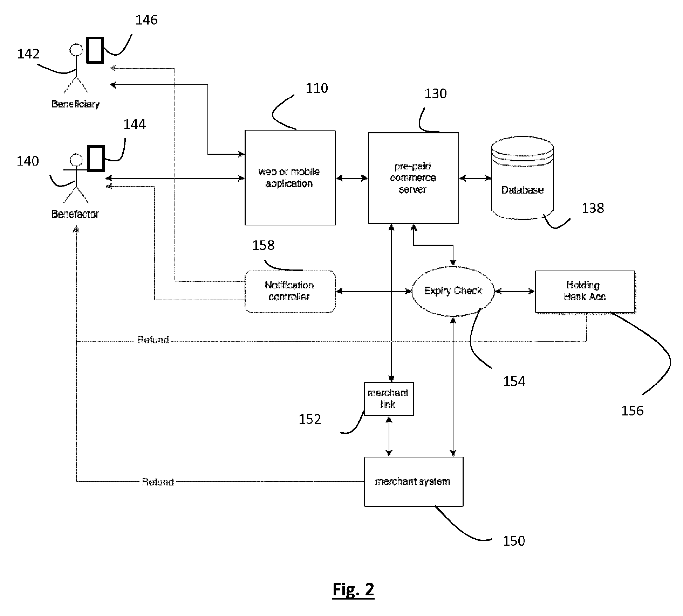

Referring to the drawings and initially to Figures 1 to 3, an exemplary system 100 for processing a pre-paid redeemable transaction is illustrated. The system 100 facilitates pre-payment for items using an on-line platform. The system 100 provides a platform which allows benefactors 140 to pre-pay for items which may be subsequently claimed by beneficiaries 142. If the pre-paid item is not claimed by its intended beneficiary within a specified duration set by the benefactor 140 the original pre-paid amount may be refunded to the benefactor 140. In this scenario the item will no longer have a pre-paid status associated with it. The system 100 comprises a payer application 110 which is accessible via a first client device 144 associated with the benefactor 140 and a second client the device 146 associated with the beneficiary 142. The first client device 144 and the second client device 146 are operable to communicate with a payment server 130 via the payer application 110. The first and second client devices 144, 146 may be smart phones, computing tablets, or any other suitable computing device. The benefactor 140 interfaces with the payer application 110 using the first client device 144 in order to select an item for prepayment and to select a beneficiary 142 who then is able to claim the pre-paid item within a certain time frame. The payer application 110 generates payment request data associated with the benefactor 140 on the payer application 110. The payment request data comprises redeemable payment data associated with the selected beneficiary 142 which is valid for a predetermined time period. The payment server 130 then forwards the payment request data to a payment network 135 which is operable to effect a payment transaction such that a value corresponding to the monetary value of the item selected for prepayment is transferred from an account associated with the benefactor 140 to an intermediate holding account. Funds may then be transferred from the intermediate holding account to a destination account associated with a merchant that supplies the item for sale when the prepaid item is claimed by the beneficiary 142. Alternatively, it may not be necessary to use an intermediate holding account. In such a scenario, the funds may be transferred directly to a destination account associated with the merchant upon the pre-paid item being claimed.

Upon completing the payment transaction the payment server 130 generates a notification which includes redeemable payment data which is relayed to the second client device 146 which is associated with the beneficiary 142. The beneficiary 142 may use the redeemable payment data as a means for paying for the item gifted to them by the benefactor 140. In order to pay for the item the beneficiary 142 validates the redeemable payment data by interfacing with the payment application 110. The notification may include instructions detailing how the redeemable payment data may be validated. The redeemable payment data may be provided in any suitable format and may include by way of example a machine readable code; a bar code, a quick response (QR) code, an identifier, an identification number, or a password, a token, etc. In an exemplary embodiment the beneficiary 142 validates the redeemable payment data by relaying the redeemable payment data to the payer application 110 using the second client device 146.

It will be appreciated that the system 100 includes one or more software modules which are programmed to implement predefined functions. The payer application 110 may be either a mobile or a web application. A central database 138 is connected to the payment network 135 in order to facilitate processing of the payment request data. The central database 138 contains the benefactor's details (credit card number, username, password, etc.), the merchant's details (location, special offers, price, opening times, etc) and the pre-payment details. It receives the payment request data and converts it to a card payment and requests the payment on behalf of the merchant over the card payment network. The payment request data after being generated is forwarded from the payer application 110 to a payment server 130. The payment server 130 initates a payment transaction from a source account associated with the benefactor 140 to a destination account in response to receiving the payment request data. The destination account may be associated with a merchant that supplies the item for sale.

The transaction payment processing steps may involve conventional electronic payment infrastructure entities. In a typical transaction, a digital wallet on the first client device 144 provides a Primary Account Number (PAN) (or card number) together with other card details (such as a card expiry date, card code verification (CCV) number etc.) to the payment server 130 via the payment application 110. The payment server 130 is in communiation with a merchant system 150 via a link 152. The transaction processing steps may include tokens such as those used by the MasterCard Digital Enablement Service (MDES). Tokens are card numbers that mobile devices use in place of the card number printed on plastic cards. The merchant system 150 transmits the card number and the details to an 'acquirer', i.e. a financial institution that facilitates and processes card payments made to the merchant. The acquirer then transmits an authorisation request via the payment card network to an issuer or an expiry check module 154 of the card used to make the payment. The expiry check module 154 processes the received request and determines whether or not the request is allowable. If the payment provider 154 determines that the payment request is allowable, an authorisation response is transmitted via the payment card network to the acquirer and initiates the transfer of the payment amount to the merchant's account 156 or an intermediate holding account. A notification controller 158 is configured to generate a notification indicating the status of the transaction which may be relayed to the first client device 144 of the benefactor 140 via a communication medium. The communication medium may include by way of example, a short messaging service (SMS) message, a multimedia messaging service (MMS) message, an email, or the like. Similary, the notification controller 158 may be configured to relay the notification indicating the status of the transaction to the second client device 146 associated with the beneficiary 142.

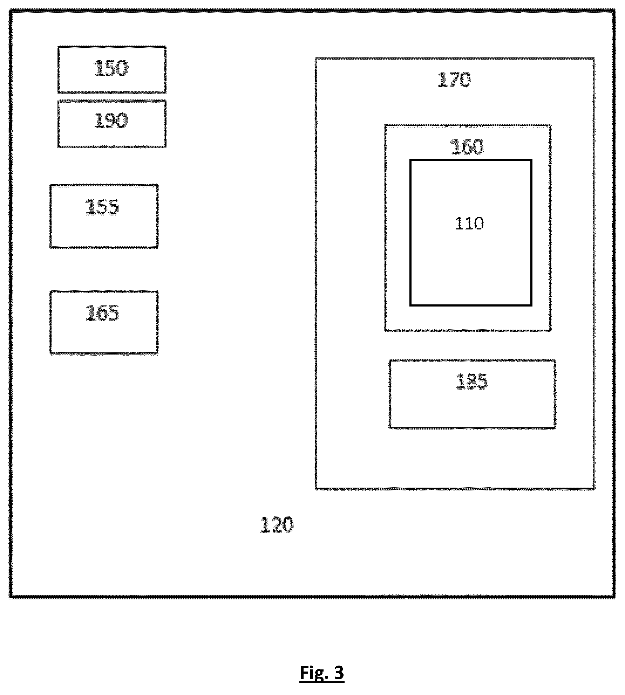

It will be appreciated that the system 100 includes one or more software modules which are programmed to implement predefined functions. The first client device 144 and the second client device 146 may be smart phones. An exemplary smart phone is illustrated in Figure 3 which may be used as the first client device 144 or the second client device 146. The smart phone 120 includes various hardware and software components that function to perform the methods according to the present disclosure. The smart phone 120 comprises a user interface 150, a processor 155 in communication with a memory 160, and a communication interface 165. The processor 155 functions to execute software instructions that can be loaded and stored in the memory 160. The processor 155 may include a number of processors, a multi-processor core, or some other type of processor, depending on the particular implementation. The memory 160 may be accessible by the processor 155, thereby enabling the processor 155 to receive and execute instructions stored on the memory 160. The memory 160 may be, for example, a random access memory (RAM) or any other suitable volatile or non-volatile computer readable storage medium. In addition, the memory 160 may be fixed or removable and may contain one or more components or devices such as a hard drive, a flash memory, a rewritable optical disk, a rewritable magnetic tape, or some combination of the above.

One or more software modules 170 may be encoded in the memory 160. The software modules 170 may comprise one or more software programs or applications having computer program code or a set of instructions configured to be executed by the processor 155. Such computer program code or instructions for carrying out operations for aspects of the systems and methods disclosed herein may be written in any combination of one or more programming languages.

The software modules 170 may include one or more components of the payer application 110 and/or one or more additional applications configured to be executed by the processor 155. During execution of the software modules 170, the processor 155 configures the smart phone 120 to perform various operations relating to the effecting the pre-paid redeemable transaction according to embodiments of the present disclosure.

Other information and/or data relevant to the operation of the present systems and methods, such as a database 185, may also be stored on the memory 160. The database 185 may contain and/or maintain various data items and elements that are utilized throughout the various operations of the payment application 110. It should be noted that although the database 185 is depicted as being configured locally to the client device 120, in certain implementations the database 185 and/or various other data elements stored therein may be located remotely. Such elements may be located on a remote device or server - not shown, and connected to the client device 120 through a network in a manner known to those skilled in the art, in order to be loaded into a processor and executed.

Further, the program code of the software modules 170 and one or more computer readable storage devices (such as the memory 160) form a computer program product that may be manufactured and/or distributed in accordance with the present disclosure, as is known to those of skill in the art.

The communication interface 165 is also operatively connected to the processor 155 and may be any interface that enables communication between the smart phone 120 and external devices, machines and/or elements including the payment server 130. The communication interface 165 is configured for transmitting and/or receiving data. For example, the communication interface 165 may include but is not limited to a Bluetooth, or cellular transceiver, a satellite communication transmitter/receiver, an optical port and/or any other such, interfaces for wirelessly connecting the smart phone 120 to the payment server 130.

The user interface 150 is also operatively connected to the processor 155. The user interface may comprise one or more input device(s) such as switch(es), button(s), key(s), and a touchscreen. The user interface 150 functions to allow the entry of data. The user interface 150 functions to facilitate the capture of commands from the user such as an on-off commands or settings related to operation of the above-described method.

A display 190 may also be operatively connected to the processor 155. The display 190 may include a screen or any other such presentation device that enables the user to view various options, parameters, and results, such as the group identifiers. The display 190 may be a digital display such as an LED display. The user interface 150 and the display 190 may be integrated into a touch screen display. The operation of the client device 120 and the various elements and components described above will be understood by those skilled in the art with reference to the method and system for effecting a pre-paid redeemable transaction.

It will be understood that what has been described herein is an exemplary system 100 for effecting a pre-paid redeemable transaction. While the present disclosure has been described with reference to exemplary arrangements it will be understood that it is not intended to limit the disclosure to such arrangements as modifications can be made without departing from the spirit and scope of the present teaching. The method of the present teaching may be implemented in software, firmware, hardware, or a combination thereof. In one mode, the method is implemented in software, as an executable program, and is executed by one or more special or general purpose digital computer(s). The steps of the method may be implemented by a server or computer in which the software modules reside or partially reside.

Generally, in terms of hardware architecture, such a computer will include, as will be well understood by the person skilled in the art, a processor, memory, and one or more input and/or output (I/O) devices (or peripherals) that are communicatively coupled via a local interface. The local interface can be, for example, but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the other computer components.

It will be appreciated that the system 100 may be implemented using cloud or local server architecture. In this way it will be understood that the present teaching is to be limited only insofar as is deemed necessary in the light of the appended claims. In one exemplary embodiment, the method includes presenting by the beneficiary the notification containing the redeemable payment data to a point of sale interface to effect validation of the redeemable payment data. Advantageously, the GUI of the payer application 110 may comprise status indicia indicative of the status of the pre-paid redeemable transaction; and/or indicative of the remaining time before the predetermined period expires. The payment server 130 may be configured to send one or more reminder messages to the beneficiary prior to the redeemable payment data being validated. For example, if the redeemable transaction is close to expiring; reminders may be sent to the beneficiary if the redeemable payment data has not yet been validated. The database 138 may comprise particulars associated with one or more benefactors and/or particulars associated with one or more third parties; and/or particulars associated with one or more beneficiaries.

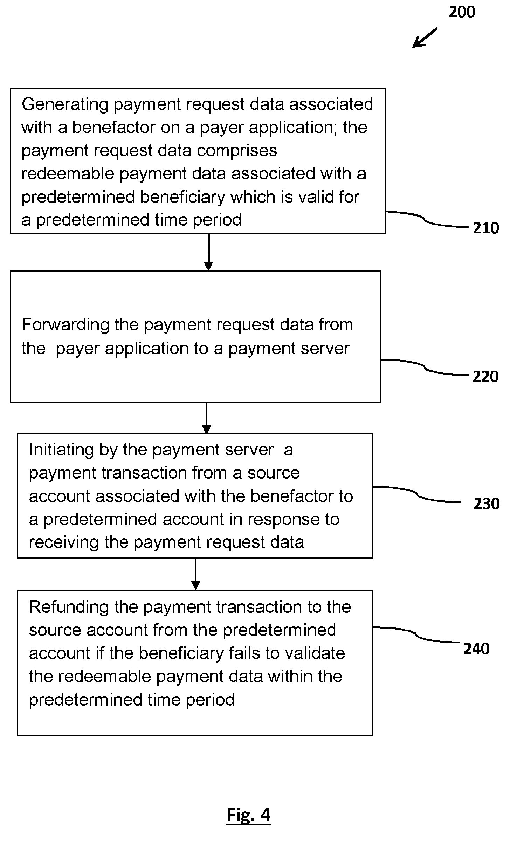

The flow chart 200 of Figure 4 illustrates exemplary steps for effecting a pre-paid redeemable transaction in accordance with the present teaching. The method may comprise generating payment request data associated with a benefactor 140 on a payer application 110; the payment request data comprises redeemable payment data associated with a predetermined beneficiary 142 which is valid for a predetermined time period, step 210. Futhermore, the method may include forwarding the payment request data from the payer application 110 to the payment server 130, step 220. The method may also include initiating by the payment server 130 a payment transaction from a source account associated with the benefactor 140 to a predetermined account in response to receiving the payment request data, step 230. Additiionally, the method may include refunding the payment transaction to the source account from the predtermined account if the beneficiary 142 fails to validate the redeemable payment data within the predetermined time period.

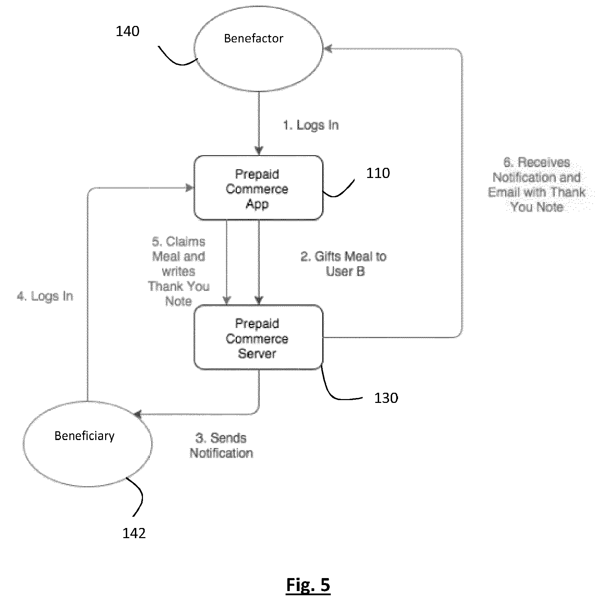

Referring to Figure 5 which illustrates steps for effecting an exemplary pre-paid redeemable transaction using the system 100. The benefactor 140 logs into the payment application 110 using the first client device 144, step 1. The benefactor interfaces with the payment application 110 using the graphical user interface (GUI) to select an item for prepayment and to select a beneficiary 142 who is gifted the item. In addition the benefactor 140 sets a time period within which the beneficiary 142 may claim the gifted item, step 2. The item selected for prepayment in this example is associated with an item on a menu of a particular restaurant. The payment application 110 generates pre-paid redeemable data based on the selections made by the benefactor 140 which is relayed to the payment server 130 which results in the transfer of funds corresponding to the monetary value of the selected menu item from an account associated with the benefactor 140 to an account associated with the merchant. The payment server 130 sends a notification to the beneficiary 142 which contains information to facilitate the beneficiary 142 to validate the redeemable payment data so that the pre-paid item may be claimed, step 3. In response to receiving the notification, the beneficiary 142 logs into the payer application 120 using the second client device 146, step 4. The beneficiary 142 interfaces with the payer application 110 in order to validate the pre-paid redeemable data thereby claiming the pre-paid item, step 5. In this example, the payer application 120 facilitates messaging between the first client device 144 and the second client device 146 via the payment server 130 thereby allowing the beneficiary 144 to thank the benefactor 140 for the gifted item, step 6.

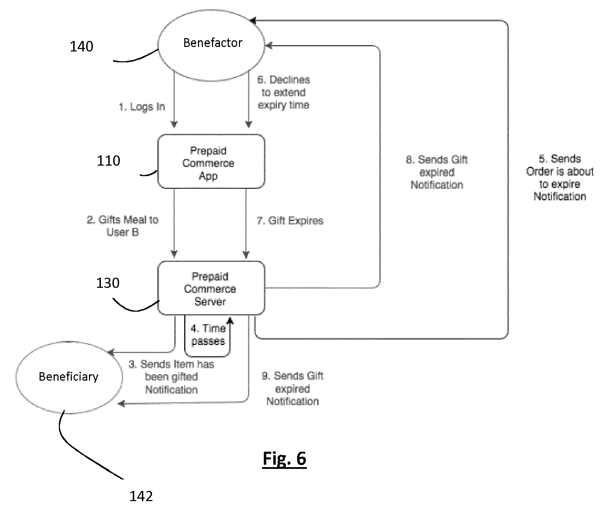

Referring to Figure 6 which illustrates steps for effecting an exemplary pre-paid redeemable transaction using the system 100. In this example, steps 1 to 3 correspond to the steps 1 to 3 previously described with reference to Figure 5. In this scenario, the beneficiary 142 fails to validate the redeemable pre-paid data within the predetermined period set by the benefactor 140, step 4. As a consequence, the payment server 130 sends a notification to the first client device 144 of the benefactor 140 indicating that the pre-paid item has not yet been claimed by the beneficiary 142 and that the expiry period is close, step 5. The payer application 120 provides the benefactor 140 with an option to extend the expiry period that the beneficiary may claim the item. In this example, the benefactor declines to extend the expiry period, step 6. After the expiry period has expired, the status of the pre-paid transacion automatically becomes expired. The payer application 120 relays the expired status of the pre-paid transaction to the payment server 130, step 7. The payment server 130 relays the expired status of the transaction to both the benefactor 140 and the beneficiary 142, step 8. In this scenario, the payment transaction is refunded to the account of the benefactor 140 from the account of the merchant since the beneficiary 142 failed to validate the redeemable payment data within the predetermined time period.

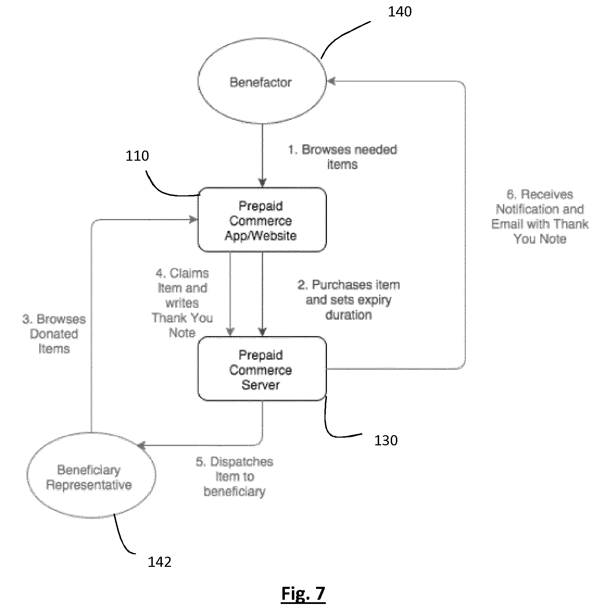

Referring to Figure 7 which illustrates steps for effecting an exemplary pre-paid redeemable transaction using the system 100. In this example, the benefactor 140 does not know the beneficiary 142. For example, the benefactor 140 may wish to make a donation to refugees but is not familar with what items refugees need. The payer application 120 may be configured for displaying items that refugees require. This allows the benefactor 140 to use the payer application 110 to browse through recommended items that are indicated as being needed by the refugees. The payer application 110 provides a conduit that allows the benefactor 140 to select some recommended items. In a similar fashion as previously described, the benefactor 140 sets a duration until that the selected pre-paid items are available for consumption by refugees in a particular country or in any particular camp. The benefactor 140 logs into the payment application 110 using the first client device 144, step 1. The benefactor interfaces with the payment application 110 using the graphical user interface (GUI) to select an item for prepayment and to select a beneficiary 142 who is gifted the item. In addition the benefactor 140 sets a time period within which the beneficiary 144 may claim the gifted item, step 2. In this example, the beneficiary may be a representative for refugees. The beneficiary 142 logs into the payer application 120 using the second client device 146, step 3. The beneficiary 144 interfaces with the payer application 110 to view items which have been donated and have a pre-paid status, step 3. The beneficiary 142 selects using the payer application 120 one or more items that have a pre-paid status thereby claiming these items by validating redeemable payment data associated with the pre-paid items, step 4. After the pre-paid items have been claimed by the beneficiary, the payment server 130 transfer the appropriate funds from an account of the benefactor to an account of a merchant which supplies the items, step 5. In this example, the payer application 120 facilitates messaging between the first client device 144 and the second client device 146 via the payment server 130 thereby allowing the beneficiary 142 to thank the benefactor 140 for the donated items, step 6. In this example, the beneficiary 144 may be from a specified refugee camp. The beneficiary 144 can visit the payer application 120 and browses through items that have been donated to them by benefactors 140. If they are in need of these items they can claim the desired items. The system 100 may enforce limits on the number of items each individual can claim within certain time periods. The benefactor will have already paid for the items along with any associated shipping charges. The claimed items will be dispatched from the merchant to the person who claimed it in the refugee camp.

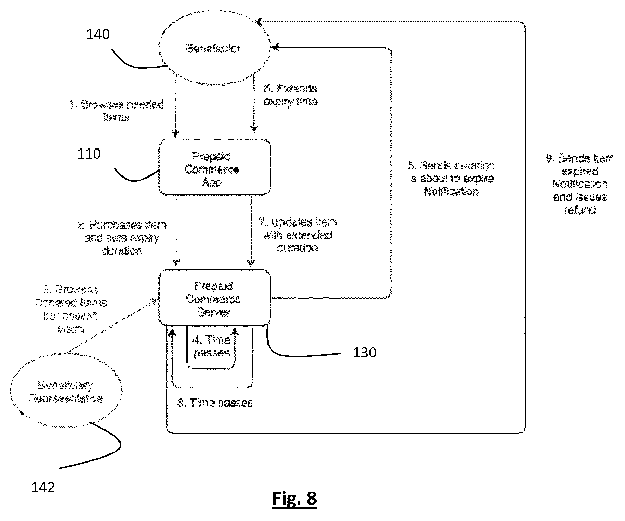

Referring to Figure 8 which illustrates steps for effecting an exemplary pre-paid redeemable transaction using the system 100. In this example, steps 1 to 3 correspond to the steps 1 to 3 previously described with reference to Figure 7. In this scenario, the beneficiary 142 fails to validate the redeemable pre-paid data within the predetermined period set by the benefactor 140, step 4. As a consequence, the payment server 130 sends a notification to the first client device 144 of the benefactor 140 indicating that the pre-paid item has not yet been claimed by the beneficiary 144 and that the expiry period is close, step 5. The payer application 120 provides the benefactor 140 with an option to extend the expiry period that the beneficiary may claim the item. In this example, the benefactor 142 decides to extend the expiry period, step 6. The expiry period associated with the transaction is updated with the extended time period, step 7. However, the beneficiary 140 fails to claim any pre-paid items within the extended time limit, step 8. In this scenario, the payment transaction is refunded to the account of the benefactor 140 since the beneficiary 142 failed to validate the redeemable payment data within the predetermined time period and the benefactor is notified, step 9.

It should be emphasized that the above-described embodiments of the present teaching, particularly, any "preferred" embodiments, are possible examples of implementations, merely set forth for a clear understanding of the principles. Many variations and modifications may be made to the above-described embodiment(s) without substantially departing from the spirit and principles of the present teaching. All such modifications are intended to be included herein within the scope of this disclosure and the present invention and protected by the following claims. For example, steps associated with the processes described herein can be performed in any order, unless otherwise specified or dictated by the steps themselves. The present disclosure is intended to embrace all such alternatives, modifications and variances that fall within the scope of the appended claims.

Similarly the words comprises/comprising when used in the specification are used to specify the presence of stated features, integers, steps or components but do not preclude the presence or addition of one or more additional features, integers, steps, components or groups thereof.

## Claims

1. A computer-implemented method for effecting a pre-paid redeemable transaction, the method comprising:
generating payment request data associated with a benefactor on a payer application (110); the payment request data comprises redeemable payment data associated with a predetermined beneficiary which is valid for a predetermined time period,
forwarding the payment request data from the payer application (110) to a payment server (130);
initiating by the payment server (130) a payment transaction from a source account associated with the benefactor to a predetermined account in response to receiving the payment request data; and
refunding the payment transaction to the source account from the predetermined account if the beneficiary fails to validate the redeemable payment data within the predetermined time period.

2. A method as claimed in claim 1, wherein the payer application is configured to allow the benefactor to manipulate the payment request data during the predetermined time period.

3. A method as claimed in claimed in claim 2, wherein the payer application is configured to allow the benefactor to revise the payment request data in order to extend the predetermined time period.

4. A method as claimed in any one of claims 1 to 3; further comprising forwarding a notification to the recipient containing the redeemable payment data.

5. A method as claimed in claim 4; wherein the redeemable payment data comprises at least one of a machine readable code; a bar code, a quick response (QR) code, an identifier, an identification number, a token, or a password.

6. A method as claimed in claim 4 or 5; further comprising presenting by the beneficiary the notification containing the redeemable payment data to a point of sale interface to effect validation of the redeemable payment data.

7. A method as claimed in any one of the preceding claims; wherein the payer application (110) comprises a graphical user interface (GUI) for facilitating the benefactor interfacing with the payer application.

8. A method as claimed in claim 7; wherein the GUI comprises status indicia indicative of the status of the pre-paid redeemable transaction; and/or indicative of the remaining time before the predetermined period expires.

9. A method as claimed in any one of the preceding claims; wherein the payment server is configured to send one or more reminder messages to the beneficiary prior to the redeemable payment data being validated.

10. A method as claimed in any one of the preceding claims, further comprising a database accessible by the payment server (130).

11. A method as claimed in claim 10, wherein the database (138) comprises particulars associated with one or more benefactors and/or particulars associated with one or more third parties; and/or particulars associated with one or more beneficiaries.

12. A computer-readable medium comprising non-transitory instructions which, when executed, cause a processor to carry out a method according to any one of claims 1 to 11.

13. A system for effecting a pre-paid redeemable transaction; the system comprising one or more modules which are configured to:
generate payment request data associated with a benefactor on a payer application (110); the payment request data comprises redeemable payment data associated with a predetermined beneficiary which is valid for a predetermined time period,
forward the payment request data from the payer application (110) to a payment server (130);
initiate by the payment server (130) a payment transaction from a source account associated with the benefactor to a predetermined account in response to receiving the payment request data;
refund the payment transaction to the source account from the predetermined account if the beneficiary fails to validate the redeemable payment data within the predetermined time period.

14. A client device (120) being co-operable with a payment server (130) for effecting a pre-paid redeemable transaction; the client device (120) comprising one or more modules which are configured to
generate payment request data associated with a benefactor on a payer application (110); the payment request data comprises redeemable payment data associated with a predetermined beneficiary which is valid for a predetermined time period, and
forward the payment request data from the payer application (110) to a payment server (130).

15. A payment server (130) being co-operable with a client device (120) for effecting a payment transaction; the payment server (130) comprising one or more modules which are configured to
receive the payment request data from the payer application (110);
initiate a payment transaction from a source account associated with the benefactor to a predetermined account in response to receiving the payment request data; and
refund the payment transaction to the source account from the predetermined account if the beneficiary fails to validate the redeemable payment data within the predetermined time period.
